Europäisches Patentamt

European Patent Office

Office européen des brevets

(19)

(11) Numéro de publication: **0 158 168**
**B1**

(12) **FASCICULE DE BREVET EUROPEEN**

(45) Date de publication du fascicule du brevet:
**01.06.88**

(51) Int. Cl.⁴: **G 01 M 3/20**

(21) Numéro de dépôt: **85103142.7**

(22) Date de dépôt: **19.03.85**

(54) Procédé pour dépolluer un détecteur de fuite à hélium et dispositif pour la mise en oeuvre du procédé.

(30) Priorité: **23.03.84 FR 8404565**

(43) Date de publication de la demande:
**16.10.85 Bulletin 85/42**

(45) Mention de la délivrance du brevet:
**01.06.88 Bulletin 88/22**

(84) Etats contractants désignés:
**BE CH DE FR GB IT LI NL**

(56) Documents cités:
**EP - A - 0 033 945**
**EP - A - 0 070 341**
**FR - A - 1 474 137**
**US - A - 3 645 127**

**THE SOVIET JOURNAL OF NONDESTRUCTIVE
TESTING, volume 14, no. 6, juin 1978, pages
517-520, Plenum Publishing Corp., New York, US; A.P.
VASILEV: "Automation of preparatory operations in
mass-spectrometric leak testing"**

(73) Titulaire: **ALCATEL CIT, 33, rue Emeriau, F-75015 Paris
(FR)**

(72) Inventeur: **Tallon, Jacques, 1 Place St-François,
F-74000 Annecy (FR)**
Inventeur: **Morel, Jacques, 23 avenue de Novel,
F-74000 Annecy (FR)**

(74) Mandataire: **Weinmiller, Jürgen et al,
Lennéstrasse 9 Postfach 24, D-8133 Feldafing (DE)**

ACTORUM AG

## Description

La présente invention concerne un procédé pour dépolluer un détecteur de fuites à hélium et un dispositif pour la mise en œuvre du procédé.

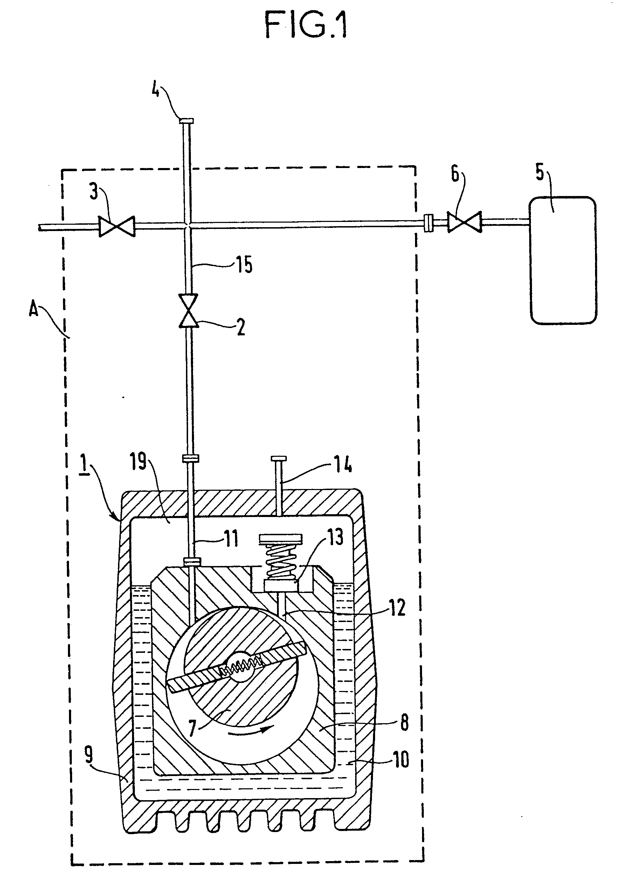

Un détecteur de fuites à hélium comporte essentiellement deux parties comme le montre la fig. 1 du dessin annexé – 1) une station de pompage comportant une pompe à ailettes 1, une vanne d'isolement 2 de la pompe à palettes et une vanne 3 d'entrée d'air, enfin une entrée 4 destinée à être reliée à une enceinte à tester, cette entrée 4 pouvant également être obturée – 2) un analyseur de gaz 5, comportant une vanne d'entrée 6 et relié à la station de pompage.

L'analyseur 5 détecte et mesure la quantité d'hélium qui pénètre dans l'appareil par l'entrée 4. Un tel détecteur est par exemple connu par le brevet français 1 474 137.

On procède à l'essai de la façon suivante:

Les vannes 3 et 6 sont fermées, la vanne 2 est ouverte et l'entrée 4 est reliée à l'enceinte à tester. On met en route la pompe 1 pour vider l'enceinte. Ensuite, on ferme la vanne 2. On ouvre alors la vanne d'entrée 6 et on effectue la mesure en promenant un jet d'hélium contre les parois de l'enceinte à tester. Si cette enceinte comporte une fuite, de l'hélium pénètre dans l'enceinte et de là passe par l'entrée 4 jusqu'à l'analyseur 5 qui détecte et mesure la présence d'hélium et donc la fuite de l'enceinte à tester.

Cependant, il arrive parfois que l'analyseur 5 détecte un signal de fuite alors même que l'on n'a pas encore «arrosé» d'hélium l'enceinte à tester. Cela provient d'une pollution de l'installation lors, par exemple, d'un essai antérieur où de l'hélium a été introduit dans le circuit. Lors du nouvel essai il se produit donc un dégazage des parois et des composants de l'appareil qui provoque ce «bruit de fond» qui laisse croire à une fuite. La solution adoptée actuellement est, la vanne 3 étant fermée et la vanne 2 étant ouverte, de pomper avec la pompe à palette 1 pendant un certain temps qui, dans certains cas, peut être très long car ce «bruit de fond» est parfois très important. On peut donc pomper comme cela pendant deux heures. En effet, on pensait que la pollution provenait surtout du dégazage des parois et de l'huile contenue dans la cuve de la pompe à palette et que ce dégazage était donc très lent.

Il semble cependant, que la cause principale provient d'une concentration d'hélium dans l'espace libre situé dans la cuve de la pompe à palettes au-dessus de la surface de l'huile.

En effet, si on appelle Pe la pression à l'entrée d'une pompe à palette et Ps la pression dans l'espace S de la cuve situé au-dessus de l'huile, cet espace étant sensiblement à la pression atmosphérique, le taux de compression d'une pompe de ce type, pour l'hélium, est de l'ordre de $10^7$ c'est-à-dire que le rapport des pressions partielles d'hélium

$$\frac{Ps}{Pe} \cong 10^7.$$

Si l'hélium contenu dans l'espace S est dans la même proportion que l'hélium normalement contenu dans l'atmosphère c'est-à-dire à une pression partielle de Ps = $5,10^{-6}$ bar, on a alors:

$$Pe = \frac{5,10^{-6}}{10^7} \; 5,10^{-13} \text{ bar}$$

et cette pression partielle d'hélium dans les conduites d'entrée de l'analyseur est suffisamment basse pour ne pas provoquer un bruit de fond gênant. Mais si, à la suite d'une forte introduction d'hélium dans l'appareil, l'espace S contient une forte proportion d'hélium, par exemple à une pression de $10^{-1}$ bar de pression partielle, la pression partielle Pe à l'entrée et donc dans les canalisations d'entrée de l'analyseur devient

$$Pe = \frac{10^{-1}}{10^7} = 10^{-8} \text{ bar}$$

Une telle pression partielle d'hélium à l'entrée limite les performances de l'analyseur en créant un «bruit de fond» facilement décelable par l'analyseur 5 alors même qu'il n'y a aucune fuite.

Le remède à apporter est donc de réduire la pression Ps l'hélium dans la cuve de la pompe à palette.

La présente invention a donc pour objet un procédé pour dépolluer un détecteur de fuite à hélium, comprenant une station de pompage d'un analyseur de gaz relié à la station de pompage par une conduite d'entrée d'air munie d'une vanne d'introduction, la station de pompage comprenant une pompe à palettes comportant un rotor et un stator, l'ensemble étant placé dans une cuve remplie d'huile, en conduit d'aspiration reliant l'intérieur du stator à l'extérieur de la cuve, un canal d'échappement reliant l'intérieur du stator à l'intérieur de la cuve laquelle communique avec l'extérieur par un point de la cuve située au-dessus du niveau de l'huile, la station de pompage comprenant en outre une conduite de liaison comportant à une extrémité une prise de branchement sur un appareil à tester et reliée par son autre extrémité à ladite conduite d'aspiration par l'intermédiaire d'une vanne d'isolement de la pompe, une vanne d'entrée d'air étant en outre placée sur une conduite dont une extrémité est ouverte à l'extérieur et dont l'autre est reliée à ladite conduite de liaison entre la prise de branchement et la vanne d'isolement, caractérisé en ce que, la vanne d'introduction étant fermée, on réalise un renouvellement important de l'air contenu dans l'espace libre de la cuve, au-dessus du niveau d'huile, avant d'exécuter le test de fuite.

Selon une première mise en œuvre du procédé, le renouvellement de l'air est réalisé en faisant fonctionner la pompe en aspirant à la pression atmosphérique.

Pour ce faire, la station de pompage est munie d'un organe de commande électrique permettant l'ouverture simultanée de la vanne d'isolement de la pompe et de la vanne l'entrée d'air.

Selon une deuxième réalisation pratique pour la mise en œuvre du procédé, une vanne auxiliaire est montée sur la conduite de liaison entre la vanne d'isolement de la pompe et la pompe elle-même, ladite vanne permettant en position d'ouverture, la communication directe entre l'atmosphère et ladite conduite de liaison. On agit alors de la façon suivante: on ferme la vanne d'isolement de la pompe et on ouvre ladite vanne auxiliaire avant de mettre la pompe en route.

Selon une deuxième mise en œuvre du procédé, on injecte directement de l'air comprimé dans la cuve de la pompe au-dessus du niveau d'huile. Pour ce faire, une vanne annexe, branchée sur la cuve au-dessus du niveau d'huile, permet sa communication avec l'extérieur et son branchement sur un moyen d'injection d'air comprimé.

On va maintenant décrire des exemples de mise en œuvre de l'invention en référence au dessin annexé dans lequel:

La fig. 1 représente schématiquement un banc de détection de fuite connu;

les fig. 2, 3 et 4 représentent schématiquement trois bancs de détection de fuite selon l'invention permettant d'appliquer le procédé de l'invention.

La fig. 1 représente donc un banc de détection de fuite comprenant une station de pompage, entourée d'un rectangle A en traits discontinus, comprenant une pompe à palette 1, une vanne d'isolement 2 de la pompe, une vanne d'entrée d'air 3 et une prise de branchement 4 destinée à être reliée à une enceinte à tester. Un analyseur de gaz 5 est relié à la station de pompage par une conduite d'entrée munie d'une vanne d'introduction 6.

La pompe à palettes 1 comprend un rotor 7 et un stator 8. Le stator 8 est placé dans une cuve 9 partiellement remplie d'huile 10.

Un conduit d'aspiration 11 relie l'intérieur du stator à l'extérieur de la cuve et un canal d'échappement 12 relie l'intérieur du stator à l'intérieur de la cuve par l'intermédiaire d'une soupape anti-retour 13. La cuve 9 communique par une ouverture 14, à l'extérieur. Une conduite de liaison 15 relie la prise de branchement 4 au conduit d'aspiration 11. Ce conduit est muni de la vanne d'isolement 2. La vanne d'entrée d'air 3 est située entre la prise de branchement 4 et la vanne d'isolement 3 et elle permet la communication de l'extérieur avec la conduite de liaison 15.

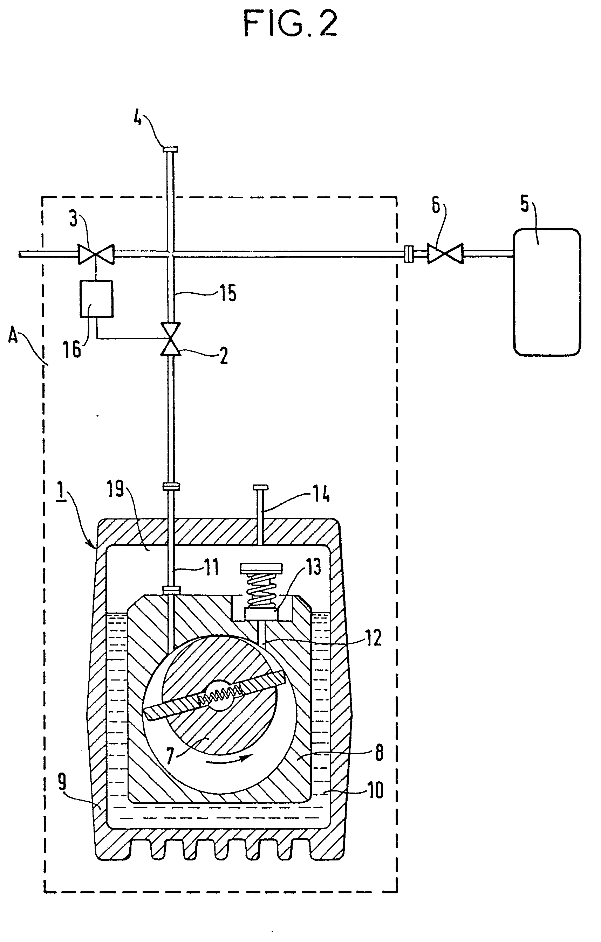

La fig. 2 montre une première réalisation permettant d'agir selon le procédé de l'invention. Une commande électrique 16 permet l'ouverture simultanée des vannes 2 et 3. La vanne d'introduction 6 étant fermée, on donne l'ordre d'ouverture de ces vannes 2 et 3 et on met en route la pompe 1 qui fonctionne donc an aspirant à la pression atmosphérique. Au bout d'une ou deux minutes, on peut cesser l'opération et procéder comme d'habitude au test.

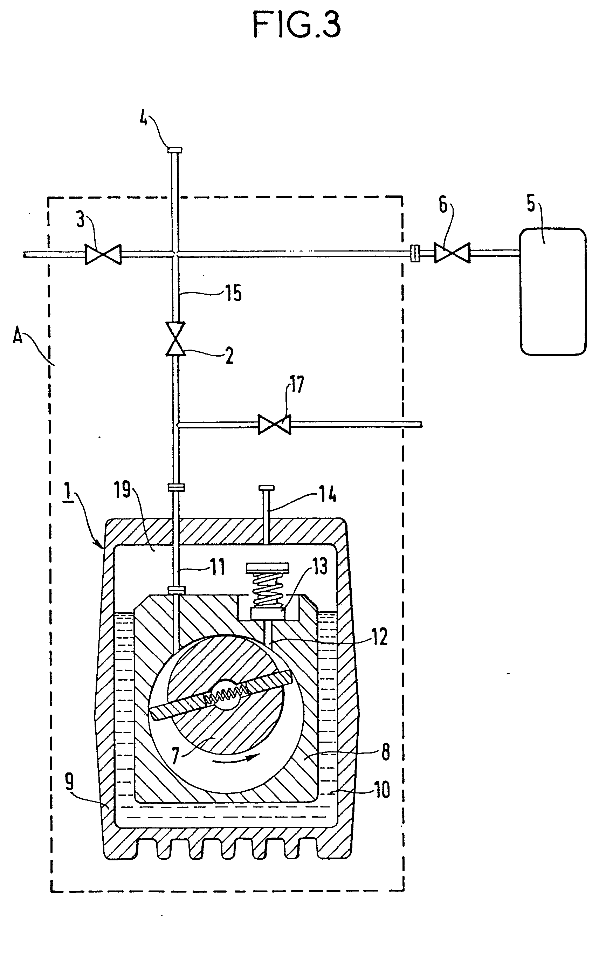

La fig. 3 montre une petite variante dans laquelle on a ajouté une vanne auxiliaire 17 faisant communiquer l'atmosphère avec la conduite de liaison 15 en aval de la vanne d'isolement 2 de la pompe. Dans cette variante, la dépollution de la partie libre de la cuve 9 au-dessus du niveau de l'huile 10 se fait également en faisant fonctionner la pompe en aspirant à la pression atmosphérique en ouvrant cette vanne auxiliaire 17 et en fermant la vanne d'isolement 2.

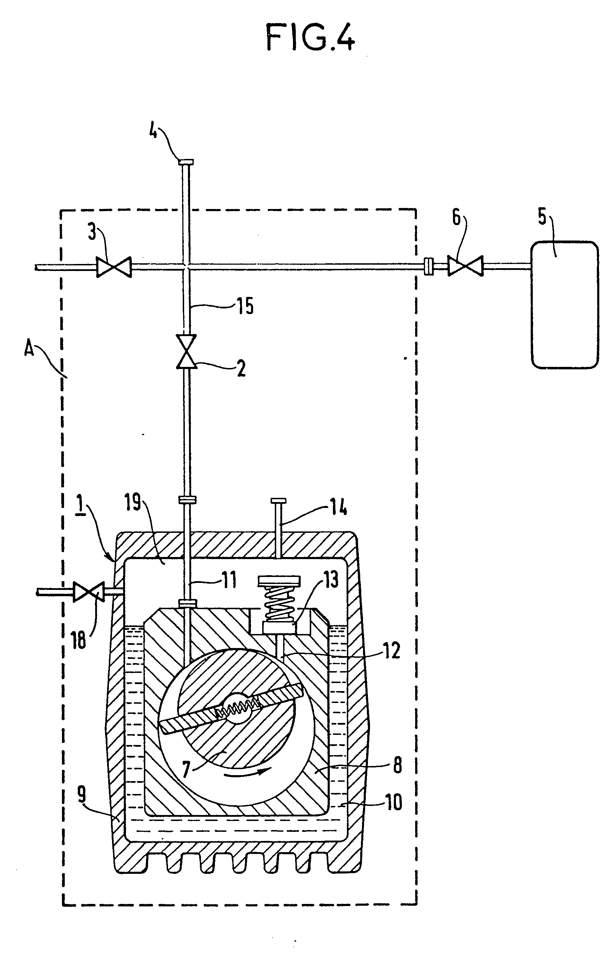

Enfin la fig. 4 montre une autre variante dans laquelle on injecte directement de l'air comprimé dans la cuve au-dessus du niveau de l'huile. A cet effet, on munit la cuve 9 d'une vanne annexe 18 permettant de faire communiquer l'espace libre 19 de la cuve avec l'atmosphère.

Il suffit alors, la vanne 18 étant ouverte, d'envoyer d'une manière quelconque un jet d'air comprimé dans la cuve, la pompe étant à l'arrêt ou non. Cette vanne annexe 18 de même que la vanne auxiliaire 17 de la fig. 3 peuvent être commandées par de simples poussoirs électriques.

## Revendications

1. Procédé pour dépolluer un détecteur de fuites à hélium comprenant une station de pompage et un analyseur de gaz (5) relié à la station de pompage par une conduite d'entrée munie d'une vanne d'introduction (6), la station de pompage comprenant une pompe à palettes (1) comportant un rotor (7) et un stator (8), l'ensemble étant placé dans une cuve partiellement remplie d'huile (10) un conduit d'aspiration (11) reliant l'intérieur du stator à l'extérieur de la cuve, un canal d'échappement (12) reliant l'intérieur du stator à l'intérieur de la cuve laquelle communique avec l'extérieur par un point (14) de la cuve située au-dessus du niveau de l'huile, la station de pompage comprenant en outre une conduite de liaison (15) comprenant à une extrémité une prise de branchement (4) sur un appareil à tester et reliée par son autre extrémité audit conduit d'aspiration par l'intermédiaire d'une vanne d'isolement (2) de la pompe, une vanne d'entrée d'air (3) étant en outre placé sur une conduite dont une extrémité est ouverte à l'extérieur et dont l'autre est reliée à ladite conduite de liaison (15) entre la prise de branchement (4) et la vanne d'isolement (2), caractérisé en ce que, la vanne d'introduction (6) étant fermée, on réalise un renouvellement important de l'air contenu dans l'espace libre de la cuve au-dessus du niveau d'huile, avant d'exécuter le test de fuite.

2. Procédé selon la revendication 1, caractérisé en ce que ledit renouvellement d'air est réalisé en faisant fonctionner la pompe en aspirant à la pression atmosphérique.

3. Dispositif pour la mise en œuvre du procédé selon la revendication 2, caractérisé en ce que la station de pompage est munie d'une organe de commande électrique (16) permettant l'ouverture simultanée de la vanne d'isolement de la pompe (2) et de la vanne d'entrée d'air (3).

4. Dispositif pour la mise en œuvre du procédé selon la revendication 2, caractérisé en ce qu'une vanne auxiliaire (17) est montée sur ladite conduite de liaison (15) entre la vanne d'isolement (2) de la pompe et la pompe elle-même, ladite vanne permettant, en position d'ouverture, la communication directe entre l'atmosphère et ladite conduite de liaison.

5. Procédé selon la revendication 2, utilisant le dispositif selon la revendication 4, caractérisé en ce qu'on ferme la vanne d'isolement (2) de la pompe et en ce que l'on ouvre ladite vanne auxiliaire (17) avant de mettre la pompe (1) en route.

6. Procédé selon la revendication 1, caractérisé en ce que l'on injecte directement de l'air comprimé dans la cuve de la pompe au dessus du niveau d'huile.

7. Dispositif pour la mise en œuvre du procédé selon la revendication 6, caractérisé en ce qu'une vanne annexe (18), branchée sur la cuve au-dessus du niveau d'huile permet sa communication avec l'extérieur et son branchement sur un moyen d'injection d'air comprimé.

**Patentansprüche**

1. Verfahren zur Reinigung eines Heliumleckdetektors, der eine Pumpstation und einen an die Pumpstation über eine ein Einlassventil (6) aufweisende Eingangsleitung angeschlossenen Gasanalysator (5) enthält, wobei die Pumpstation eine Drehschieberpumpe (1) mit einem Rotor (7) und einem Stator (8) aufweist und das Ganze in einem mit Öl (10) teilweise gefüllten Behälter angeordnet ist, wobei eine Saugleitung (11) das Innere des Stators mit der Aussenseite des Tanks verbindet und ein Ausstosskanal (12) das Innere des Stators mit dem Inneren des Tanks verbindet, der mit der Aussenwelt über einen Punkt (14) im Tank oberhalb des Ölpegels in Verbindung steht, wobei die Pumpstation ausserdem eine Verbindungsleitung (15) aufweist, die an einem Ende einen Anschluss (4) für ein zu testendes Gerät enthält und mit ihrem anderen Ende an die Saugleitung über ein Isolierventil (2) der Pumpe angeschlossen ist, wobei ein Lufteinlassventil (3) ausserdem in einer Leitung liegt, die mit einem Ende offen nach aussen mündet und deren anderes Ende an die Verbindungsleitung (15) zwischen dem Anschluss (4) und dem Isolationsventil (2) angeschlossen ist, dadurch gekennzeichnet, dass bei geschlossenem Einlassventil (6) eine gründliche Erneuerung der im freien Raum des Tanks oberhalb des Ölpegels vorhandenen Luft vor Durchführung des Lecktests erfolgt.

2. Verfahren nach Anspruch 1, dadurch gekennzeichnet, dass die Erneuerung der Luft dadurch erfolgt, dass die Pumpe bei Atmosphärendruck ansaugt.

3. Vorrichtung zur Durchführung des Verfahrens nach Anspruch 2, dadurch gekennzeichnet, dass die Pumpstation ein elektrisches Steuerorgan (16) aufweist, mit dem gleichzeitig das Isolationsventil der Pumpe (2) und das Lufteinlassventil (3) geöffnet werden können.

4. Vorrichtung zur Durchführung des Verfahrens nach Anspruch 2, dadurch gekennzeichnet, dass ein Hilfsventil (17) in der Verbindungsleitung (15) zwischen dem Isolationsventil (2) der Pumpe und der Pumpe selbst eingefügt ist, das im geöffneten Zustand die unmittelbare Verbindung zwischen Atmosphäre und der Verbindungsleitung herstellt.

5. Verfahren nach Anspruch 2, das die Vorrichtung nach Anspruch 4 verwendet, dadurch gekennzeichnet, dass man das Isolationsventil (2) der Pumpe schliesst und dass man das Hilfsventil (17) vor der Inbetriebnahme der Pumpe (1) öffnet.

6. Verfahren nach Anspruch 1, dadurch gekennzeichnet, dass man komprimierte Luft unmittelbar in den Tank der Pumpe oberhalb des Ölpegels einspeist.

7. Vorrichtung zur Durchführung des Verfahrens nach Anspruch 6, dadurch gekennzeichnet, dass ein Zusatzventil (18), das an den Tank oberhalb des Ölpegels angeschlossen ist, dessen Verbindung mit der Aussenwelt und dessen Anschluss an ein Einspeisemittel für komprimierte Luft erlaubt.

**Claims**

1. A method of de-polluting a helium leak detector comprising a pumping station and a gas analyzer (5) connected to the pumping station via an air inlet duct provided with an insertion valve (6), the pumping station comprising a sliding vane rotary vacuum pump (1) including a rotor (7) and a stator (8), the assembly being placed in a sump partially filled with oil (10), a suction duct (11) connecting the interior of the stator to the exterior of the sump, an exhaust channel (12) connecting the interior of the stator to the interior of the sump which is in communication with the exterior via a point (14) of the sump which is situated above the oil level, the pumping station further including a link duct (15) having a connection (4) to an apparatus to be tested at one end and having its other end connected to the said suction duct via a pump isolating valve (2), an air inlet valve (3) being placed in addition on a duct having one end which is open to the exterior and whose other end is connected to the said link duct (15) between the connection (4) and the isolating valve (2), characterized in that, with the insertion valve (6) closed, the air contained in the free space in the sump above the oil level is thoroughly swept through prior to performing a leak test.

2. A method according to claim 1, characterized in that the air is swept by operating the pump with its suction connected to atmospheric pressure.

3. An apparatus for performing the method of claim 1, characterized in that the pumping station is provided with an electrical control member (16) enabling the pump isolating valve (2) and the air inlet valve (3) to be opened simultaneously.

4. An apparatus for performing the method of claim 2, characterized in that an auxiliary valve (17) is mounted on the said link duct (15) between the pump isolating valve (2) and the pump itself, said valve having an open position in which it provides direct communication between the atmosphere and the said link duct.

5. A method according to claim 2, using the apparatus according to claim 4, characterized in that the pump isolating valve (2) is closed and the auxiliary valve (17) is opened prior to switching on the pump.

6. A method according to claim 1, characterized in that compressed air is directly injected into the sump of the pump above the oil level.

7. An apparatus for implementing the method according to claim 6, characterized in that an additional valve (18) is provided on the sump above the oil level to enable the sump to communicate with the exterior, and to enable it to be connected to compresses air injection means.

# FIG.1

# FIG.2

# FIG.3

# FIG.4